# FASCICULE DE BREVET EUROPEEN

(11) **EP 0 983 629 B1**
(45) Date de publication et mention de la délivrance du brevet: **18.09.2002**
(21) Numéro de dépôt: 98925762.1
(22) Date de dépôt: 20.05.1998
(51) Int. Cl.: H02K 3/487, H02K 15/00

(54) **PROCEDE DE CALAGE DE BOBINAGES**
VERFAHREN ZUR VERKEILUNG VON WICKLUNGEN
METHOD FOR FASTENING WINDINGS WITH WEDGES

(30) Priorité: 20.05.1997 FR 9706122
(43) Date de publication de la demande: 08.03.2000
(73) Titulaire: Sarelem, 44472 Nantes Carquefou (FR)
(72) Inventeur: SALVI, Jo[l, F-44330 La Chapelle Heulin (FR)
(74) Mandataire: Bentz, Jean-Paul
(86) Numéro de dépôt international: FR9801018
(87) Numéro de publication internationale: WO98053543

(56) Documents cités:
- EP-A- 0 068 727
- DE-A- 3 612 112
- DE-C- 433 070
- FR-A- 1 137 319
- FR-A- 2 559 967
- US-A- 4 149 101

## Description

L'invention concerne les machines électriques tournantes dont le circuit magnétique est constitué par un empilement de tôles, ménageant des encoches dans lesquelles sont placées les barres ou bobines des bobinages.

Elle est plus particulièrement destinée aux machines dont les encoches sont complètement ouvertes vers l'alésage. Elle s'applique notamment aux stators de grosses machines électriques, en particulier de machines synchrones.

L'invention est relative à un procédé de calage des bobinages dans les encoches ainsi qu'à une cale de fermeture d'encoche.

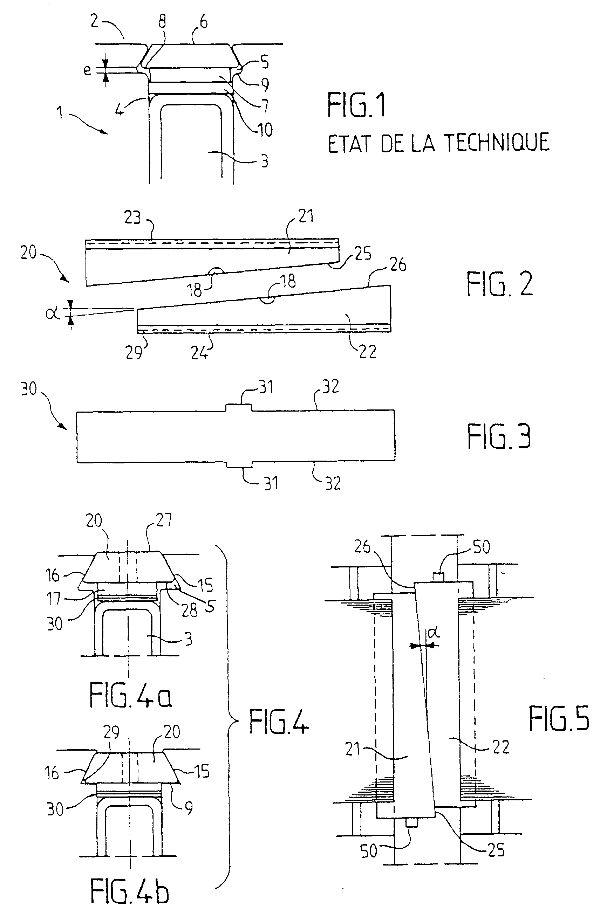

On se réfère à la figure 1 qui represente une coupe partielle d'une machine tournante selon l'état de l'art, perpendiculaire à l'axe de la machine.

Une machine tournante classique comporte un stator 1, dont l'alésage 2 est destiné à recevoir le rotor de la machine (non représenté). Le circuit magnétique prévu dans le stator comporte des encoches 4 dans lesquelles sont placés des bobinages 3.

Lorsque les encoches 4 sont complètement ouvertes vers l'alésage, à l'extrémité des encoches débouchant dans l'alésage, sont prévus des évidements 5 en forme de queue d'aronde. Dans cet évidement, peut être logée une cale 6, généralement appelée cale de fermeture d'encoche.

Ces cales ont pour fonction de maintenir le bobinage serré radialement contre le fond de l'encoche. Il est, en effet, nécessaire d'empêcher toute vibration du bobinage, ces vibrations produisant, par friction, une érosion qui détériore le mur isolant.

Pour maintenir efficacement les bobinages dans les encoches, les constructeurs ont tout d'abord utilisé la technique dite de calage dur.

Cette technique conduit à bloquer complètement, sans souplesse radiale, les bobinages dans les encoches.

Elle présente des inconvénients dus au vieillissement des bobinages dans le temps. Ce vieillissement se traduit par une réduction du mur isolant. Celle-ci crée un jeu radial qui n'existait pas lors de la construction de la machine. Sous l'effet des efforts magnétiques, les bobinages vibrent dans l'encoche, les vibrations étant d'autant plus importantes que la valeur du jeu augmente. Ces vibrations provoquent l'usure des bobinages, ce qui est préjudiciable au bon fonctionnement de la machine.

Pour pallier les inconvénients liés au maigrissement dans le temps du mur isolant, les constructeurs ont mis au point une autre technique, dite de calage souple.

Cette technique consiste à placer dans une encoche, entre la cale de fermeture d'encoche et le bobinage, un élément souple soumis à une précontrainte.

La valeur de la précontrainte est choisie pour compenser et rattraper, au cours du temps, le maigrissement naturel du bobinage.

Cet élément souple peut prendre la forme d'un élément élastique ou d'un ressort qui est précontraint mécaniquement lors de sa mise en place, pour assurer un serrage permanent du bobinage dans l'encoche.

Dans l'exemple illustré à la figure 1, c'est la technique du calage souple qui a été utilisée. La référence 7 désigne un ressort élastique, qui peut notamment être réalisé en un tissu de verre Epoxy formé à chaud, généralement appelé "Ripple Spring".

La cale de fermeture d'encoche 6 est placée dans l'évidement 5, après la mise en place du bobinage 3.

Elle est introduite par une extrémité du circuit magnétique et dans une direction parallèle à l'axe de la machine.

La cale 6 est généralement constituée en plusieurs parties, par exemple quatre ou cinq, réparties sur la hauteur de l'empilement.

Pour que la cale 6 puisse glisser dans l'évidement 5, celui-ci doit être de dimensions supérieures à la cale elle-même. C'est pourquoi, après l'introduction de cale 6, il subsiste un jeu e entre la face interne 8 de la cale et le fond ou talon 9 de l'évidement 5. La valeur de ce jeu ne peut être déterminée à l'avance, compte-tenu des tolérances de fabrication.

Par ailleurs, on utilise généralement des cales supplémentaires, dites « sous-cales », pour parfaire le blocage des bobinages. Il est, en effet, classique de prévoir une légère surcharge pour la pression de calage de façon à maintenir les bobinages bloqués dans le temps. Ces sous-cales sont généralement disposées entre la face interne de la cale de fermeture d'encoche et une couche de feutre placée sur le bobinage, pour un calage dur et entre l'élément élastique et le bobinage, pour un calage souple.

Dans ce dernier type de calage, la difficulté essentielle est de régler la valeur de la précontrainte radiale appliquée à l'élément élastique.

Les sous-cales portent la référence 10 sur la figure 1.

Elles sont glissées dans l'encoche, entre le bobinage et la cale de fermeture d'encoche. Leur nombre ne peut pas pratiquement être déterminé à l'avance, puisque la valeur du jeu e n'est pas elle-même connue.

Le calage au moyen des sous-cales est donc réalisé par tâtonnements. C'est le savoir-faire de l'opérateur qui est ici déterminant.

La mise en place des sous-cales constitue une opération relativement longue, lors de la fabrication ou de la réparation des stators.

Un tel procédé de calage de bobinages dans une encoche est décrit dans le document FR-A-2559967.

Par ailleurs, une technique classique pour s'assurer du bon calage des bobinages consiste à donner des coups de marteau sur la cale de fermeture d'encoche. Le son qui en résulte donne à l'opérateur des indications sur la qualité de calage.

Cette technique de calage au marteau entraîne des risques de blessure du bobinage par percussion.

Les contraintes économiques rendent nécessaires tant la réduction des coûts que celle du temps d'intervention. Par ailleurs, les risques de détérioration des bobinages, au cours de la fabrication des circuits magnétiques doivent être éliminés pour prolonger la durée de fonctionnement des machines.

L'invention a donc pour objet de pallier les inconvénients des techniques connues en proposant un procédé simplifié de calage avec introduction de sous-cales, ne reposant plus sur le savoir-faire de l'opérateur et pouvant être utilisé dans la technique de calage dur comme de calage souple.

L'invention concerne donc un procédé de calage de bobinages dans une encoche d'un circuit magnétique selon la revendication 1 et consistant à :
- mesurer la distance entre le fond de l'évidement en queue d'aronde de ladite encoche et le bobinage,
- déterminer le nombre de sous-cales nécessaires au calage du bobinage, en fonction de la technique de calage utilisée,
- introduire lesdites sous-cales dans l'encoche,
- placer dans ladite encoche, au moins une cale de fermeture d'encoche conforme à l'invention, les deux parties complémentaires étant décalées en hauteur,
- rapprocher lesdites parties complémentaires de façon à reformer ladite cale, la face inférieure de ladite cale étant alors en contact avec le fond de l'évidement.

Les caractéristiques techniques suivantes peuvent également être prises en considération selon toutes leurs combinaisons techniquement possibles :
- les cales de fermeture d'encoche placées dans ladite encoche sont réparties sur environ 2/3 à 3/5 de la hauteur de ladite encoche,
- les cales de fermeture d'encoche sont décalées les unes par rapport aux autres, d'une encoche à l'autre,
- le procédé consiste également à placer un élément élastique dans l'encoche, entre la cale de fermeture d'encoche et le bobinage,
- il consiste également à placer un feutre dans l'encoche, entre la cale de fermeture d'encoche et le bobinage,
- le procédé consiste à placer dans l'encoche des sous-cales présentant des pattes de fixation destinées à être introduites dans des évents de ventilation du circuit magnétique.

L'invention sera mieux comprise et d'autres buts et avantages de celle-ci apparaîtront plus clairement à la lecture de la description qui suit de modes de réalisation non limitatifs de l'invention et sur lesquels :
- la figure 2 est une vue en plan d'une cale de fermeture d'encoche selon l'invention,
- la figure 3 est une vue en plan d'une sous-cale,
- la figure 4 comporte les figures 4a et 4b qui sont des vues partielles en coupe d'une machine tournante, perpendiculaire à l'axe de la machine, illustrant deux étapes de la mise en place, dans une encoche, d'une cale de fermeture d'encoche selon l'invention et
- la figure 5 est une vue partielle en plan d'une encoche de la machine, selon l'axe de la machine, au cours de la mise en place d'une cale de fermeture d'encoche selon l'invention.

Les éléments communs aux figures 1 à 5 seront désignés par les mêmes références.

En référence à la figure 2, la cale de fermeture d'encoche 20 selon l'invention est réalisée en deux parties 21, 22 complémentaires et indépendantes. Chacune d'elles comporte une première face latérale 23, 24 externe dont la pente coïncide avec celle des parois 15 et 16 de l'évidement 5 et une deuxième face latérale 25, 26 verticale, et sensiblement perpendiculaire aux faces supérieure et inférieure 27 et 28 de la cale 20.

Les deux faces latérales internes 25, 26 sont en biseau et complémentaires. La cale 20 présente ainsi, lorsque les deux parties 21 et 22 sont assemblées, la même forme générale qu'une cale de fermeture d'encoche classique.

On désigne par α l'angle entre les deux faces 23 et 25, ou 24, 26. Cet angle α est déterminé de manière à obtenir un serrage par coincement des deux parties de la cale. Il dépend notamment de la matière constitutive de la cale. L'angle α est inférieur à l'angle de frottement du matériau utilisé pour réaliser la cale.

La référence 18 désigne un trou ménagé entre les parois supérieure et inférieure 25 , 26 et destiné à recevoir un pion de blocage dont la fonction sera décrite ultérieurement.

Ce trou est, de préférence, réalisé une fois que les deux parties de la cale sont placées en vis-à-vis dans une encoche.

La cale 20 est notamment réalisée en un matériau composite à base de mat de verre et de résine époxy. Ses dimensions correspondent à celles de l'évidement dans lequel elle sera placée.

La cale 20 comporte, de préférence, une partie 29 en retrait entre chacune de ses parois latérales extérieures 23, 24 et sa paroi inférieure 28. Cette partie 29 facilite l'introduction et le glissement de chaque partie 21, 22 de la cale dans l'évidement 5.

La figure 3 illustre une sous-cale 30 qui présente une forme générale rectangulaire. Sa largeur correspond sensiblement à celle de l'encoche dans laquelle elle doit être placée. Deux pattes de fixation 31 en saillie sont prévues sur chacune des plus grandes faces 32 de la sous-cale. Ces pattes sont destinées à étre placées dans les évents de ventilation qui sont ménagés dans l'empilement, selon sa circonférence. Ces évents débouchent dans les encoches et sont donc perpendiculaires à l'axe de celles-ci, lui-même parallèle à l'axe de la machine.

Ces pattes de fixation maintiennent la cale dans l'encoche et évitent ainsi le glissement éventuel de la cale dans l'encoche, selon l'axe de la machine.

L'épaisseur des sous-cales est relativement faible, environ 2 mm, de façon à pouvoir facilement réaliser le blocage des bobinages en adaptant le nombre de sous-cales.

La mise en place d'une cale de fermeture d'encoche va maintenant être décrite en référence aux figures 4 et 5.

Dans l'exemple illustré à la figure 4, c'est une technique de calage souple qui est utilisée. La référence 17 désigne un élément élastique notamment du type "Ripple Spring" et la référence 30 désigne une sous-cale, plusieurs sous-cales étant illustrées sur les figures 4a et 4b.

Cependant, la cale de fermeture d'encoche selon l'invention, comme le procédé de calage selon l'invention sont également applicables avec une technique de calage dur.

Chaque partie 21, 22 de la cale 20 est placée dans l'évidement 5, les deux parties étant écartées l'une de l'autre, en pratique l'une au-dessus de l'autre. Cette première étape de mise en place n'est pas illustrée sur les figures.

Il n'est plus nécessaire d'introduire la cale par une extrémité de l'empilement, puisque chaque partie 21 ou 22 de la cale présente des dimensions bien inférieures à celles de l'évidement 5 et peut être directement placée dans celui-ci. On procède alors à un rapprochement des deux parties 21 et 22 qui se trouvent alors dans la position illustrée aux figures 4a et 5.

En pratique, le rapprochement est réalisé au moyen d'une pince pneumatique qui n'est pas illustrée sur les figures. Seule la référence 50 désigne les doigts de cette pince, en contact avec les parties 21 et 22 de la cale.

Dans la position illustrée aux figures 4a et 5, les faces internes 25, 26 des parties 21 et 22 de la cale ne sont pas complètement en regard l'une de l'autre. Les parties 21 et 22 ne sont pas non plus complètement introduites dans l'évidement 5.

On continue à rapprocher l'une de l'autre les deux parties 21 et 22 de la cale jusqu'à ce que les deux faces internes 25, 26 soient complètement en regard.

La cale 20 se trouve alors dans la position illustrée à la figure 4b, c'est-à-dire en contact avec le fond 9 et les parois 15 et 16 de l'évidement 5.

Par ailleurs, l'angle α que forment les faces internes 25, 26 de chaque partie constitutive de la cale est choisi de façon à ce que les deux parties 21, 22 ne puissent plus glisser l'une par rapport à l'autre, sous l'effet des efforts auxquels elles peuvent être soumises au cours du fonctionnement de la machine. Le calage est alors irréversible.

Pour parfaire le maintien de la cale 20 dans l'évidement 5, on réalise le trou 18, une fois que la cale 20 est dans la position illustrée à la figure 4b, et on introduit un pion dans le trou 18.

Ainsi, la cale de fermeture d'encoche selon l'invention peut présenter des dimensions correspondant à celles de l'évidement, ce qui lui permet d'être toujours en appui sur le fond 9 de l'évidement. Ceci est rendu possible par la conception en au moins deux parties de cette cale de fermeture d'encoche. Chacune des parties peut être facilement introduite dans l'évidement, sans qu'il soit nécessaire de prévoir un évidement de dimensions supérieures à celles de la cale.

C'est pourquoi, la cale de fermeture d'encoche selon l'invention permet de simplifier le procédé de calage des bobinages dans les encoches.

Dans la mesure où l'évidement 5 et la cale de fermeture d'encoche 20 peuvent être de dimensions telles que la cale est en contact avec le fond 9 de l'évidement lorsqu'elle est positionnée dans l'encoche, le fond de l'évidement constitue une surface de référence.

Lorsque le bobinage 3 a été placé dans l'encoche 4, on mesure la distance entre le fond 9 de l'évidement et le bobinage.

Cette mesure permet de déterminer le nombre de sous-cales qui est nécessaire pour assurer le blocage du bobinage, en fonction de la technique de calage qui est utilisée.

Pour la technique de calage dur, le nombre de sous-cales correspond au résultat de la mesure, en tenant compte de l'épaisseur d'une éventuelle couche de feutre entre les sous-cales et le bobinage.

Pour la technique de calage souple, le nombre de sous-cales dépend à la fois, de la contrainte qui doit être appliquée sur l'élément élastique et du résultat de la mesure.

Ainsi, le nombre de sous-cales qui doivent être introduites dans l'encoche est défini au préalable, encoche par encoche, grâce au fait que le fond de l'évidement constitue une surface de référence, avec la cale de fermeture d'encoche selon l'invention.

Le calage des bobinages dans les encoches est, en conséquence, considérablement simplifié, cette opération ne nécessitant plus de tâtonnements, ni de savoir-faire particulier de la part de l'opérateur. Par ailleurs, le calage au marteau est supprimé, ce qui évite tout risque de blessure du bobinage par percussion.

Le nombre de cales de fermeture placées dans l'encoche dépend de la hauteur de celle-ci. A titre d'exemple, pour les machines de très grande puissance, les cales doivent être réparties sur les 2/3 à 3/5 de la hauteur de l'encoche.

Par ailleurs, d'une encoche à l'autre, les cales de fermeture d'encoche sont décalées, de façon à mieux répartir les zones de calage dans l'ensemble de l'empilement du circuit magnétique.

Enfin, les cales de fermeture de l'encoche et le procédé de calage selon l'invention peuvent être utilisés aussi bien lors de la fabrication d'un circuit magnétique que pour des opérations de maintenance.

## Revendications

1. Procédé de calage de bobinages dans une encoche d'un circuit magnétique, consistant à :
- mesurer la distance entre le fond (9) de l'évidement (5) en queue d'aronde de ladite encoche et le bobinage (3),
- déterminer le nombre de sous-cales nécessaires au calage du bobinage, en fonction de la technique de calage utilisée,
- introduire lesdites sous-cales dans l'encoche (4),
- placer dans ledit évidement (5) de ladite encoche (4), au moins une cale de fermeture d'encoche (20) comprenant au moins deux parties (21, 22) complémentaires et indépendantes, dont les faces latérales (23, 24) externes présentent une pente sensiblement identique à celle de la paroi (15, 16) correspondante dudit évidement (5), les deux parties complémentaires (21, 22) étant décalées en hauteur,
- rapprocher lesdites parties complémentaires (21, 22) de façon à reformer ladite cale, la face inférieure (28) de ladite cale étant alors en contact avec le fond (9) de l'évidement (5).

2. Procédé de calage selon la revendication 1, dans lequel les cales de fermeture d'encoche (20) placées dans ladite encoche (4) sont réparties sur environ 2/3 à 3/5 de la hauteur de ladite encoche.

3. Procédé de calage selon la revendication 1 ou 2, les cales de fermeture d'encoche (20) étant décalées les unes par rapport aux autres, d'une encoche à l'autre.

4. Procédé de calage selon l'une des revendications 1 à 3, consistant également à placer un élément élastique (17) dans l'encoche (4), entre la cale de fermeture d'encoche (20) et le bobinage (3).

5. Procédé de calage selon l'une des revendications 1 à 4, consistant également à placer un feutre dans l'encoche, entre la cale de fermeture d'encoche (20) et le bobinage (3).

6. Procédé de calage selon l'une des revendications 1 à 5, consistant à placer dans l'encoche (4) des sous-cales (30) présentant des pattes de fixation (31) destinées à être introduites dans des évents de ventilation du circuit magnétique.

7. Procédé de calage selon l'une des revendications 1 à 6, dans lequel les deux parties complémentaires (21,22) de la cale de fermeture d'encoche (20) présentent des faces latérales internes (25, 26) complémentaires en biseau, chacune d'elles formant un angle α avec la face latérale externe (23, 24) correspondante de la même partie (21, 22) de la cale.

8. Procédé de calage selon la revendication 7, l'angle α étant inférieur à l'angle de frottement de la matière constitutive de la cale.

9. Procédé de calage selon la revendication 7 ou 8, dans lequel les faces latérales internes (25,26) des parties complémentaires (21,22) de la cale sont sensiblement verticales et perpendiculaires aux faces supérieure et inférieure (27, 28) de la cale.

10. Procédé de calage selon l'une des revendications 1 à 9, dans lequel la cale de fermeture d'encoche (20) présente une partie (29) en retrait entre chacune de ses faces latérales externes (23, 24) et sa paroi inférieure (28).

11. Procédé de calage selon l'une des revendications 1 à 10, dans lequel la cale de fermeture d'encoche (20) présente un trou (18) entre ses parois supérieure et inférieure (27, 28) pour un pion de blocage.

## Patentansprüche

1. Verkeilungsverfahren für Wicklungen in einer Aufnahme eines magnetischen Kreises, bestehend aus:
- Messen der Entfernung zwischen dem Boden (9) der Aussparung (5) in Schwalbenschwanzform der besagten Aufnahme und der Wicklung (3),
- Bestimmung der Zahl der für die Verkeilung der Wicklungen notwendigen Unterkeile in Abhängigkeit der eingesetzten Verkeilungstechnik,
- Einführen der besagten Unterkeile in die Aufnahme (4),
- Plattieren in der besagten Aussparung (5) der besagten Aufnahme (4) wenigstens einer Verschlussverkeilung (20) der mit wenigstens zwei komplementären und unabhängigen Teilen (21, 22), deren äußere Seitenflächen (23, 24) eine Abschrägung aufweisen, die deutlich identisch zu der entsprechenden Wand (15, 16) der Aussparung (5) ist, wobei die zwei komplementären Teile (21, 22) in der Höhe versetzt sind,
- Annähern der besagten komplementären Teile (21, 22) derart, dass der besagte Keil erneut gebildet wird, wobei die untere Seite (28) des besagten Keils dann mit dem Boden (9) der Aussparung (5) in Kontakt kommt.

2. Verkeilungsverfahren gemäß Anspruch 1, in dem die in der besagten Aufnahme (4) platzierten Verschlussverkeilung der Aufnahme (20) über ungefähr 2/3 bis 3/5 der Höhe der besagten Aufnahme verteilt werden.

3. Verkeilungsverfahren gemäß Anspruch 1 oder 2, wobei die Verschlussverkeilungen der Aufnahme (20) im Verhältnis zueinander von einer Aufnahme zur anderen versetzt sind.

4. Verkeilungsverfahren gemäß Anspruch 1 bis 3, das ebenfalls darin besteht, ein elastisches Element (17) in die Aufnahme (4) zwischen der Verschlussverkeilung der Aussparung (20) und der Wicklung (3) zu platzieren.

5. Verkeilungsverfahren gemäß Anspruch 1 bis 4, das ebenfalls darin besteht, einen Filz in die Aufnahme zwischen der Verschlussverkeilung der Aufnahme (20) und der Wicklung (3) zu platzieren.

6. Verkeilungsverfahren gemäß Anspruch 1 bis 5, das darin besteht, in die Aufnahme (4) Unterkeile (30) zu platzieren, die Befestigungsklauen (31) aufweisen, die dazu bestimmt sind, in die Belüftungsöffnungen des magnetischen Kreises eingeführt zu werden.

7. Verkeilungsverfahren gemäß Anspruch 1 bis 6, in dem die zwei komplementären Teile (21, 22) der Verschlussverkeilung der Aufnahme (20) interne Seitenflächen (25, 26) aufweisen, die in Abschrägung komplementär sind, wobei jede mit der entsprechenden äußeren Seitenwand (23, 24) desselben Teils (21, 22) des Keils einen Winkel α bildet.

8. Verkeilungsverfahren gemäß Anspruch 7, wobei der Winkel α kleiner als der Reibungswinkel des den Keil bildenden Materials ist.

9. Verkeilungsverfahren gemäß Anspruch 7 oder 8, in dem die internen Seitenflächen (25, 26) der komplementären Teile (21, 22) des Keils deutlich vertikal und senkrecht zu den oberen und unteren Flächen (27, 28) des Keils sind.

10. Verkeilungsverfahren gemäß Anspruch 1 bis 9, in dem die Verschlussverkeilung der Aufnahme (20) einen Teil (29) in Vertiefung zwischen jeder ihrer äußeren Seitenflächen (23, 24) und ihrer unteren Wand (28) aufweist.

11. Verkeilungsverfahren gemäß Anspruch 1 bis 10, in dem die Verschlussverkeilung der Aufnahme (20) ein Loch (18) zwischen ihren oberen und unteren (27, 28) Wänden für ein Blockierstück aufweist.

## Claims

1. Method for adjusting windings in a notch of a magnetic circuit consisting of:
• measuring the distance between the bottom (9) of the round tail recess (5) of said notch and the winding (3),
• determining the number of sub-blocks required for adjusting the winding according to the adjustment technique used,
• introducing said sub-blocks into the notch (4),
• placing in said recess (5) of said notch (4) at least one notch closing block (20) including at least two complementary and independent portions (21, 22) whose external lateral faces (23, 24) have a slope approximately identical to that of the corresponding wall (15, 16) of said recess (5), the two complementary portions (21, 22) having their height offset,
• bringing together said complementary portions (21, 22) so as to reshape said block, the lower face (28) of said block then being in contact with the bottom (9) of the recess (5).

2. Adjustment method according to claim 1 in which the notch closing blocks (20) placed in said notch (4) are divided between approximately 2/3 to 3/5 of the height of said notch.

3. Adjustment method according to claim 1 or 2, the notch closing blocks (20) being offset with respect to one another from one notch to another.

4. Adjustment method according to one of claims 1 to 3 and also consisting of placing an elastic element (17) in the notch (4) between the notch closing block (20) and the winding (3).

5. Adjustment method according to one of claims 1 to 4 and also consisting of placing felt in the notch between the notch closing block (20) and the winding (3).

6. Adjustment method according to one of claims 1 to 5 consisting of placing in the notch (4) sub-blocks (30) having fixing hooks (31) intended to be introduced in ventilation vents of the magnetic circuit.

7. Adjustment method according to one of claims 1 to 6 in which the two complementary portions (21, 22) of the notch closing block (20) have complementary internal bezel-shaped lateral faces (25, 26) each forming an angle α with the corresponding external lateral face (23, 24) of the same portion (21, 22) of the block.

8. Adjustment method according to claim 7, the angle a being smaller than the angle of friction of the material constituting the block.

9. Adjustment method according to claim 7 or 8 in which the internal lateral faces (25, 26) of the complementary portions (21, 22) of the block are approximately vertical and perpendicular to the upper and lower faces (27, 28) of the block.

10. Adjustment method according to one of claims 1 to 9 in which the notch closing block (20) has a standing back portion between each of its external lateral faces (23, 24) and its lower wall (28).

11. Adjustment method according to one of claims 1 to 10 in which the notch closing block (20) has a hole (18) between its upper and lower walls (27, 28) for a locking slug.
